# FASCICULE DE BREVET EUROPEEN

(11) **EP 2 196 788 B1**
(45) Date de publication et mention de la délivrance du brevet: **24.10.2012**
(21) Numéro de dépôt: 09178263.1
(22) Date de dépôt: 08.12.2009
(51) Int. Cl.: G01K 11/00

(54) **Radiomètre et procédé de mesure de température de scène radiométrique en mode pulsé**
Strahlungsmessgerät und Verfahren zum Strahlungsmessen der Feldtemperatur im Pulsbetrieb
Radiometer and method for measuring radiometric field temperature in pulsed mode

(30) Priorité: 10.12.2008 FR 0858441
(43) Date de publication de la demande: 16.06.2010
(73) Titulaire: Astrium SAS, 75016 Paris (FR)
(72) Inventeur: Trier, Marc, 31120, PINSAGUEL (FR); Sauvanet, Antoine, 78330, Fontenay Le Fleury (FR)
(74) Mandataire: Fourcade, Emmanuelle

(56) Documents cités:
- WO-A-2006/057676
- US-A- 4 347 515

## Description

La présente invention concerne la mesure de températures de scènes radiométriques, utilisant le rayonnement radiofréquence, notamment pour la calibration de dispositifs de type radar. Plus particulièrement, la présente invention concerne un radiomètre adapté pour fonctionner en mode dit pulsé, et un procédé de mesure utilisant un tel radiomètre.

De nos jours, les radars sont mis en oeuvre dans de nombreuses applications. Notamment, lorsqu'ils sont embarqués dans des aéronefs ou des véhicules spatiaux de type satellite, les radars sont utilisés pour l'observation de corps célestes, en particulier de la Terre, par exemple pour mesurer des signaux altimétriques.

Il est connu de calibrer un radar d'observation au moyen d'un radiomètre. Un tel radiomètre effectue des mesures du rayonnement radiofréquence, dites mesures de température, dans des bandes de fréquences généralement voisines des bandes de fréquences de fonctionnement du radar, et fournit un signal, dit signal vidéo, utilisé pour la calibration dudit radar.

Le document WO 2006/057676 A décrit un radiomètre et le document US-A-4 347 515 décrit la combinaison d'un radar et d'un radiomètre.

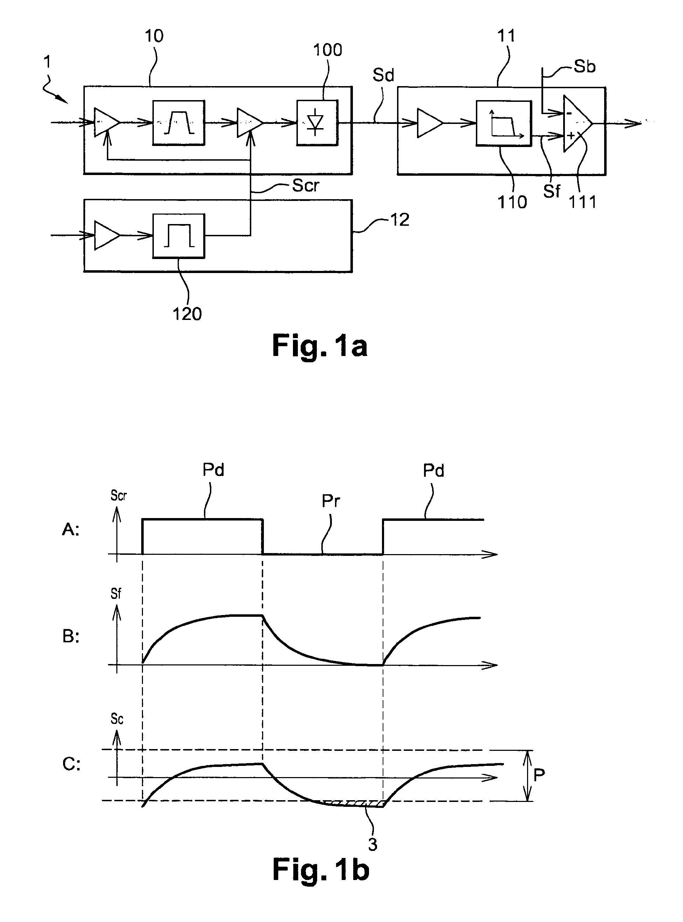

La figure 1a représente un schéma de principe d'un tel radiomètre 1, comportant un module radiofréquence 10, un module vidéo 11 et un module de commande 12.

Le module radiofréquence 10 comporte des moyens de détection 100 d'un signal Sd qui, lorsque ledit module radiofréquence est activé, est représentatif d'une température système Tsys étant la somme d'une température Ta de la scène radiométrique observée et d'une température Tb de bruit propre du radiomètre 1.

Le module vidéo 11 comporte notamment des moyens de filtrage passe-bas 110 du signal Sd produisant un signal Sf, et des moyens de correction 111 du signal Sf par un signal de biais Sb représentatif de la température Tb.

Les moyens de filtrage passe-bas 110 effectuent un filtrage passe-bas du signal Sd sur une fenêtre temporelle glissante (filtrage passe-bas qui est parfois connu sous le nom d'intégration), pour améliorer un rapport signal (composante continue représentative de la température système Tsys lorsque le module radiofréquence 10 est activé) sur bruit (bruit vidéo post-détection).

Les moyens de correction 111 sont mis en oeuvre pour assurer que les valeurs d'un signal obtenu après correction soient comprises dans une plage P ciblée de valeurs, correspondant généralement à une plage d'amplification sensiblement linéaire de moyens d'amplification en aval desdits moyens de correction, ou intégrés dans lesdits moyens de correction tel que représenté sur la figure 1a.

Le module de commande 12 comporte des moyens de contrôle 120 qui commandent le module radiofréquence 10.

En particulier, dans le cas où les bandes de fréquences du radiomètre et du radar sont voisines, et du fait des puissances des ondes radioélectriques émises par le radar et de la sensibilité du radiomètre 1, le module de commande 12 active le module radiofréquence 10 au cours de périodes récurrentes pendant lesquelles le radar n'émet pas, dites périodes de détection Pd, séparées par des périodes de non-détection, dites périodes de repos Pr, pendant lesquelles ledit module radiofréquence est désactivé en tout ou partie, afin de prévenir une détérioration du radiomètre 1.

La figure 1b représente un diagramme temporel de différents signaux qui illustrent le fonctionnement et les limitations du radiomètre 1 selon l'état de l'art.

La partie A de la figure 1b représente un exemple de signal de contrôle Scr, formé par les moyens de contrôle 120, prenant essentiellement deux valeurs : une première valeur pour une période de détection Pd, et une seconde valeur pour une période de repos Pr.

La partie B de la figure 1b représente un exemple de signal Sf.

Au cours d'une période de repos Pr, le signal Sd en entrée du module vidéo 11 est de valeur sensiblement nulle. Généralement les variations de températures sont lentes par rapport à la périodicité des périodes de détection Pd et de repos Pr, et le signal Sd est sensiblement constant de valeur non nulle au cours de chaque période de détection Pd.

Le signal Sf, représentatif d'une valeur moyenne du signal Sd sur la fenêtre temporelle glissante, s'établit avec un retard qui dépend de la constante de temps des moyens de filtrage passe-bas 110.

La partie C de la figure 1b représente un exemple de signal obtenu en corrigeant le signal Sf par le signal de biais Sb. Il est à noter que la température de bruit propre du radiomètre dépend de la technologie utilisée et de la bande de fréquences considérée. Il n'est pas rare d'avoir des températures de bruit supérieures à 100 Kelvins (K), pour des températures mesurées de scènes radiométriques généralement de l'ordre de 50K à 350K. La correction par le signal de biais Sb correspond à un décalage du signal Sf, et est généralement effectuée en soustrayant le signal de biais Sb au signal Sf.

Tel qu'illustré par une zone hachurée 3, les valeurs du signal après correction ne sont plus dans la plage P ciblée, tandis que les moyens d'amplification en aval des moyens de correction 111 sont toujours activés.

D'une part, une sortie de la plage P est susceptible d'entraîner des détériorations des équipements en aval des moyens de correction 111.

D'autre part, on s'attend à ce qu'une sortie de la plage P introduise des non-linéarités et des saturations susceptibles de causer des effets de mémoire, qui vont réduire la précision des valeurs de températures estimées en fonction du signal vidéo du fait que 1) lesdites valeurs estimées seront biaisées à cause des non linéarités, et 2) le temps disponible pour déterminer lesdites valeurs estimées sera réduit à cause des effets de mémoire qui vont diminuer la vitesse d'établissement du signal vidéo.

La présente invention se propose de résoudre les problèmes susmentionnés au moyen d'un radiomètre mesurant une température de scène radiométrique au cours de périodes de détection, séparées par des périodes de repos, comportant au moins :
- des moyens de détection d'un signal Sd représentatif en période de détection d'une température système, la température système incorporant la température de scène radiométrique et une température de bruit propre du radiomètre,
- des moyens de filtrage passe-bas du signal Sd produisant un signal Sf,
- des moyens d'obtention d'un signal de biais Sb représentatif de la température de bruit propre du radiomètre,
- des moyens de correction du signal Sf par le signal de biais Sb.

Selon l'invention, le radiomètre comporte également :
- des moyens de formation d'un signal, dit signal de remplacement Sr, utilisé pour remplacer l'un des signaux Sd ou Sf ou Sb,
- des moyens de contrôle des moyens de formation, qui commandent la formation du signal de remplacement Sr au cours d'intervalles de prévention récurrents.

De préférence, un intervalle de prévention débute par rapport à une fin d'une période de détection avec un retard T1 de durée positive ou nulle, inférieure à la durée d'une période de repos, et termine par rapport à un début de la période de détection suivante avec un retard T2 de durée positive et inférieure à la durée de ladite période de détection.

De préférence, le signal de remplacement Sr est un signal de valeur sensiblement constante au cours d'un intervalle de prévention.

Dans un mode préféré de réalisation, les moyens de formation remplacent le signal Sd par un signal de remplacement Sr de valeur sensiblement constante égale à la valeur dudit signal Sd sensiblement au moment du début de l'intervalle de prévention. Dans une variante, les moyens de formation remplacent le signal Sf par un signal de remplacement Sr de valeur sensiblement constante égale à la valeur dudit signal Sf sensiblement au moment du début de l'intervalle de prévention. De préférence, les moyens de formation comportent un échantillonneur-bloqueur.

Dans un autre mode préféré de réalisation, les moyens de formation comportent un circuit commutateur qui remplace le signal Sb par un signal de remplacement Sr, de préférence de valeur sensiblement nulle.

De préférence, la durée du retard T1 est la même pour chaque intervalle de prévention et/ou la durée du retard T2 est la même pour chaque intervalle de prévention.

L'invention concerne également un procédé de mesure de température de scène radiométrique au moyen d'un radiomètre fonctionnant en mode pulsé, comportant au cours des périodes de détection les étapes de :
a) détection d'un signal représentatif d'une température système,
b) filtrage passe-bas du signal résultant de l'étape a),
c) détermination d'un signal de biais représentatif de la température de bruit propre du radiomètre,
d) correction du signal résultant de l'étape b) par le signal de biais,

Selon l'invention, le procédé comporte également une étape e), préalable à l'étape d), de remplacement pendant des intervalles de prévention récurrents d'un signal résultant de l'une des étapes a) ou b) ou c) par un signal, dit signal de remplacement.

De préférence, un intervalle de prévention débute par rapport à une fin d'une période de détection avec un retard T1 de durée positive ou nulle, inférieure à la durée d'une période de repos, et termine par rapport à un début de la période de détection suivante avec un retard T2 de durée positive et inférieure à la durée de ladite période de détection.

De préférence, le signal de remplacement est un signal de valeur sensiblement constante au cours d'un intervalle de prévention.

Dans un mode préféré de mise en oeuvre, dans l'étape e) le signal résultant de l'étape a) est remplacé par un signal de remplacement de valeur sensiblement constante égale à la valeur dudit signal résultant de l'étape a) sensiblement au moment du début de l'intervalle de prévention. Dans une variante, dans l'étape e) le signal résultant de l'étape b) est remplacé par un signal de remplacement de valeur sensiblement constante égale à la valeur dudit signal résultant de l'étape b) sensiblement au moment du début de l'intervalle de prévention.

Dans un autre mode préféré de mise en oeuvre, dans l'étape e) le signal de biais résultant de l'étape c) est remplacé par un signal de remplacement de valeur sensiblement nulle.

De préférence, la durée du retard T1 est la même pour chaque intervalle de prévention et/ou la durée du retard T2 est la même pour chaque intervalle de prévention.

La description suivante de modes de l'invention est faite en se référant aux figures, dans lesquelles des références identiques désignent des éléments identiques ou analogues, qui représentent de manière non limitative :
- Figure 1a : déjà citée, un schéma de principe d'un exemple de radiomètre selon l'état de l'art,
- Figure 1b : déjà citée, un diagramme temporel représentant de manière schématique les variations de signaux mesurés en différents points du radiomètre de la figure 1a,
- Figure 2a : un schéma de principe d'un radiomètre selon l'invention selon un premier mode de réalisation de l'invention,
- Figure 2b : un diagramme temporel représentant de manière schématique les variations de signaux mesurés en différents points du radiomètre de la figure 2a,
- Figure 3a : un schéma de principe d'un radiomètre selon une variante du mode de réalisation de la figure 2a,
- Figure 3b : un diagramme temporel représentant de manière schématique les variations de signaux mesurés en différents points du radiomètre de la figure 3a,
- Figure 4a : un schéma de principe d'un radiomètre selon l'invention selon un second mode de réalisation de l'invention,
- Figure 4b : un diagramme temporel représentant de manière schématique les variations de signaux mesurés en différents points du radiomètre de la figure 4a.

La présente invention concerne un radiomètre pour la mesure de températures de scènes radiométriques, fonctionnant en mode pulsé, c'est-à-dire dont un module radiofréquence est désactivé en tout ou partie de façon récurrente au cours du temps. La présente invention concerne également un procédé de mesure de températures de scènes radiométriques utilisant un radiomètre fonctionnant en mode pulsé.

Le fonctionnement en mode pulsé, dit « RF blanking » dans la littérature anglo-saxonne, est particulièrement adapté aux radiomètres de calibration d'instruments d'observation tels que des radars qui, lorsque les bandes de fréquences du radiomètre et d'émission du radar sont voisines, désactivent leur module radiofréquence lorsque le radar émet.

La mesure de températures de scènes radiométriques s'effectue, de manière connue, en mesurant une puissance de rayonnement d'une scène observée dans une bande radiofréquence prédéfinie, généralement voisine de la bande d'opération du radar. Par exemple, pour un radar émettant des ondes radioélectriques dans la bande 35.5GHz - 36GHz, le radiomètre peut effectuer des mesures dans la bande 36.5GHz - 37.5GHz.

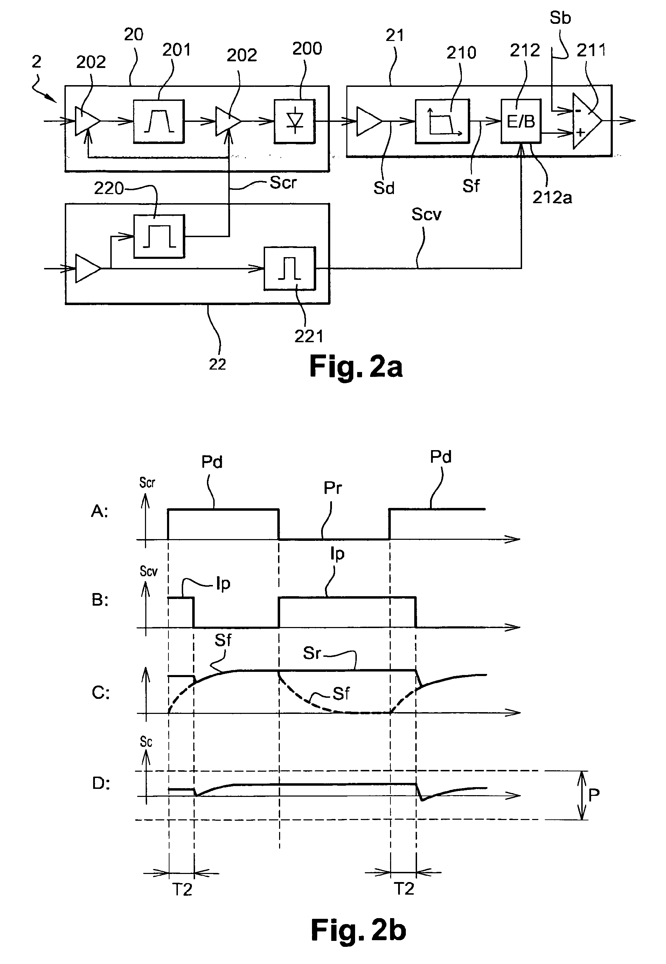

Selon l'invention, un radiomètre 2 comporte au moins les éléments suivants, visibles de façon schématique sur les figures 2a, 3a et 4a :
- un module radiofréquence 20,
- un module vidéo 21,
- un module de commande 22.

Le module radiofréquence 20 comporte des moyens de détection 200 comportant au moins un détecteur quadratique, délivrant une tension proportionnelle à une puissance d'une tension en entrée dudit détecteur quadratique. Les moyens de détection 200 produisent un signal Sd qui, lorsque ledit module radiofréquence est activé, est représentatif d'une température système Tsys étant la somme d'une température Ta de la scène radiométrique observée et d'une température Tb de bruit propre du radiomètre.

Le module radiofréquence 20 comporte également :
- des moyens de sélection 201 de canal comportant au moins un filtre passe-bande atténuant peu ou pas la bande sur laquelle on veut mesurer le rayonnement radiofréquence,
- des moyens d'amplification 202 comportant par exemple un préamplificateur faible bruit en entrée de type LNA (pour « Low Noise Amplifier »), ainsi qu'un amplificateur de canal en sortie des moyens de sélection 201 de canal.

De manière plus générale, le module radiofréquence 20, représenté de façon schématique sur les figures 2a, 3a et 4a, peut comporter d'autres éléments non représentés et non décrits, connus de l'homme de l'art.

Le module vidéo 21 comporte notamment :
- des moyens de filtrage passe-bas 210 du signal Sd produisant un signal Sf,
- des moyens de correction 211 du signal Sf par un signal de biais Sb représentatif de la température Tb, obtenu par des moyens non représentés, connus de l'homme de l'art.

Les moyens de filtrage passe-bas 210 ont une largeur de bande généralement de l'ordre de quelques kilohertz à quelques dizaines de kilohertz, inférieure à la bande fréquentielle des moyens de sélection 201.

Les moyens de correction 211 sont mis en oeuvre pour assurer que les valeurs d'un signal obtenu après correction, dit signal corrigé Sc, soient comprises dans une plage P ciblée de valeurs, correspondant généralement à une plage d'amplification sensiblement linéaire de moyens d'amplification en aval des moyens de correction, ou intégrés dans lesdits moyens de correction dans le cas d'un amplificateur opérationnel tel que représenté sur les figures 2a, 3a et 4a.

Le module de commande 22 comporte des moyens de contrôle 220 qui commandent le module radiofréquence 20. En particulier, le module de commande 22 active le module radiofréquence 20 au cours de périodes de détection Pd récurrentes, séparées par des périodes de repos Pr, pendant lesquelles ledit module radiofréquence est désactivé en tout ou partie, afin de prévenir une détérioration du radiomètre 2.

De préférence, l'alternance de périodes de détection Pd et de périodes de repos Pr est périodique, avec une périodicité par exemple comprise entre quelques dizaines de microsecondes et quelques centaines de microsecondes. On peut généralement considérer que les variations des températures mesurées sont lentes par rapport aux valeurs de périodicités considérées. En particulier, le signal de biais Sb peut le plus souvent être considéré comme étant sensiblement constant au cours d'une période de détection Pd et/ou une période de repos ; en pratique, le signal de biais Sb n'est généralement modifié que pour faire face à des dérives, par exemple liées au vieillissement des différents composants.

Le radiomètre 2 selon l'invention comporte également un dispositif anti-saturation comportant principalement :
- des moyens de formation 212 d'au moins un signal, dit signal de remplacement Sr,
- des moyens de contrôle 221 des moyens de formation 212.

Les moyens de contrôle 221 commandent la formation du signal de remplacement Sr, qui est utilisé pour remplacer l'un des signaux Sd ou Sf ou Sb au cours d'intervalles récurrents, dits intervalles de prévention Ip du fait que l'on y cherche à éviter que les valeurs du signal corrigé Sc ne soient plus comprises dans la plage P.

Il est à noter que le radiomètre 2 peut comporter d'autres modules fonctionnels, non représentés sur les figures, pouvant modifier au moins l'un des signaux Sd ou Sf ou Sb. Par « remplacer l'un des signaux Sd ou Sf ou Sb », on entend :
- pour le signal Sd : que l'on remplace le signal Sd ou un signal obtenu à partir dudit signal Sd, préalablement au filtrage par les moyens de filtrage passe-bas 210,
- pour le signal Sf: que l'on remplace le signal Sf ou un signal obtenu à partir dudit signal Sf, préalablement à la correction par les moyens de correction 211,
- pour le signal Sb : que l'on remplace le signal Sb ou un signal obtenu à partir dudit signal Sb, préalablement à la correction par les moyens de correction 211.

De préférence, chaque intervalle de prévention Ip est débuté par rapport à une fin d'une période de détection Pd avec un retard T1 de durée positive ou nulle, inférieure à la durée d'une période de repos Pr, et est terminé par rapport à un début de la période de détection Pd suivante avec un retard T2 de durée positive et inférieure à la durée de ladite période de détection. Les intervalles de prévention Ip ont la même périodicité que les périodes de détection Pd et les périodes de repos Pr.

De préférence, la durée du retard T1 est la même pour toutes les récurrences des intervalles de prévention Ip. De façon analogue, la durée du retard T2 est de préférence la même pour toutes les récurrences des intervalles de prévention Ip.

La durée du retard T1 est choisie préalablement, par simulation ou expérimentation, de sorte qu'une probabilité que le signal corrigé Sc sorte de la plage P pendant le retard T1 est nulle ou négligeable, compte tenu des valeurs possibles que peuvent prendre le signal Sf et le signal de biais Sb.

De manière analogue, la durée du retard T2 est choisie préalablement, par simulation ou expérimentation, de sorte qu'une probabilité que le signal corrigé Sc sorte de la plage P au cours de la période de détection Pd après le retard T2 est nulle ou négligeable, compte tenu des valeurs possibles que peuvent prendre le signal Sf et le signal de biais Sb. La durée du retard T2 est de préférence choisie la plus courte possible pour ne pas pénaliser le temps pendant lequel le signal Sc peut être utilisé pour estimer la température de scène radiométrique Ta.

Du fait d'une détermination préalable des durées des retards T1 et T2, le signal de remplacement Sr est formé au cours d'intervalles de prévention Ip entièrement déterminés par les transitions entre périodes de détection Pd et de repos Pr, qui incluent des intervalles au cours desquels une sortie de la plage P aurait été probable, dits intervalles de saturation. Ceci est avantageux du fait que les moments de début et de fin desdits intervalles de saturation par rapport auxdites transitions ne sont pas connus a priori, et dépendent notamment des valeurs du signal de biais Sb et du signal Sf, mais également de la constante de temps des moyens de filtrage passe-bas 210.

Le signal de remplacement Sr est formé par les moyens de formation 212, dont le fonctionnement sera mieux compris à la lecture de modes préférés de réalisation décrits ci-après.

Dans un premier temps, on considère le cas où les moyens de formation 212 remplacent au cours des intervalles de prévention Ip le signal Sf ou Sd par un signal de remplacement Sr de valeur sensiblement constante égale à la valeur du signal remplacé sensiblement au moment du début de l'intervalle de prévention.

Dans un mode préféré de réalisation du radiomètre 2 selon l'invention, les moyens de formation 212 comportent des moyens de blocage, tel qu'un échantillonneur-bloqueur 212a qui fonctionne :
- en mode échantillonneur en dehors des intervalles de prévention Ip, dans lequel un signal reçu en entrée de l'échantillonneur-bloqueur 212a est fourni en sortie :
   o sans modification, ou
   o sous une forme échantillonnée/bloquée avec une fréquence d'échantillonnage significativement supérieure à une fréquence des périodes de détection Pd, par exemple au moins 10 fois supérieure,
- en mode bloqueur au cours des intervalles de prévention Ip, dans lequel le signal de remplacement Sr formé est de valeur sensiblement constante égale à la valeur du signal reçu en entrée de l'échantillonneur-bloqueur 212a sensiblement au moment du début de l'intervalle de prévention Ip en cours, dite valeur bloquée.

Dans une première variante, représentée sur la figure 2a, l'échantillonneur-bloqueur 212a se trouve après les moyens de filtrage passe-bas 210, et reçoit en entrée le signal Sf.

La figure 2b représente un diagramme temporel de différents signaux qui illustrent le fonctionnement du radiomètre 2 de la figure 2a.

La partie A de la figure 2b représente un exemple de signal de contrôle Scr formé par les moyens de contrôle 220 pour commander le module radiofréquence 20, prenant essentiellement deux valeurs : une première valeur pour les périodes de détection Pd, et une seconde valeur pour les périodes de repos Pr.

La partie B de la figure 2b représente un exemple de signal de contrôle Scv formé par les moyens de contrôle 221 pour commander les moyens de formation 212, prenant essentiellement deux valeurs : une première valeur pour les intervalles de prévention Ip, et une seconde valeur en dehors des intervalles de prévention.

La partie C de la figure 2b représente :
- en traits discontinus, un exemple de signal Sf en sortie des moyens de filtrage passe-bas 210,
- en traits pleins, le signal obtenu en sortie de l'échantillonneur-bloqueur 212a commandé par les moyens de contrôle 221.

En dehors des intervalles de prévention Ip, le signal obtenu en sortie de l'échantillonneur-bloqueur 212a en mode échantillonneur correspond, à l'échantillonnage près, au signal Sf.

Au cours des intervalles de prévention Ip, l'échantillonneur-bloqueur 212a en mode bloqueur forme le signal de remplacement Sr qui est de valeur sensiblement constante égale à la valeur bloquée.

Dans l'exemple représenté sur la figure 2b, le retard T1 a une valeur sensiblement nulle, ce qui est possible du fait qu'une valeur instantanée du signal Sf sensiblement au moment du début de l'intervalle de prévention Ip est supposée, par dimensionnement du système, fournir un signal corrigé Sc de valeur instantanée comprise dans la plage P.

La partie D de la figure 2b représente le signal corrigé Sc, obtenu en corrigeant le signal en sortie de l'échantillonneur-bloqueur 212a par le signal de biais Sb.

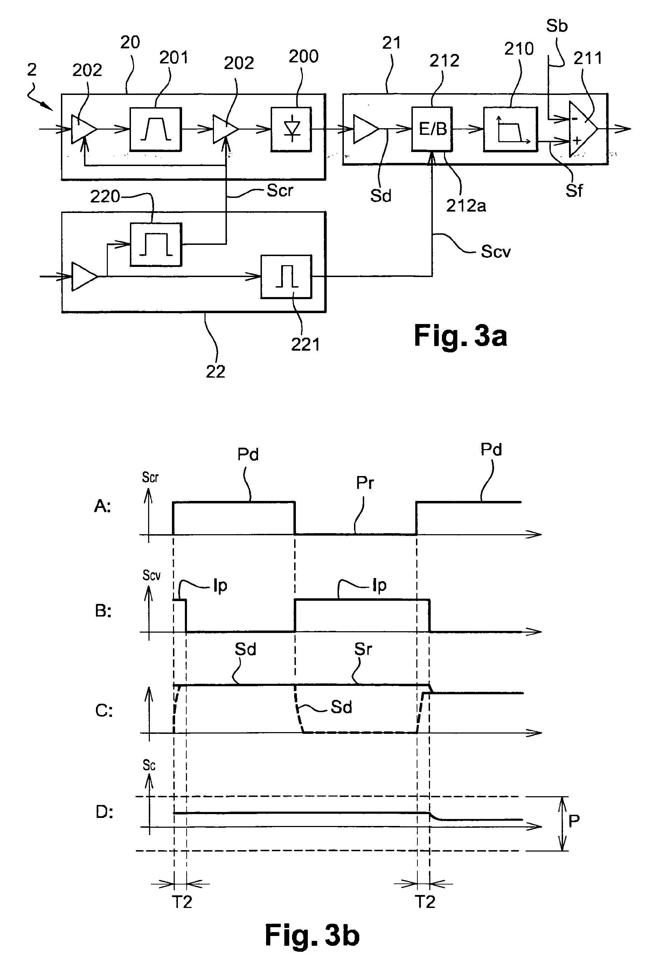

Dans une seconde variante, représentée sur la figure 3a, l'échantillonneur-bloqueur 212a se trouve avant les moyens de filtrage passe-bas 210, et reçoit en entrée le signal Sd.

La figure 3b représente un diagramme temporel de différents signaux qui illustrent le fonctionnement du radiomètre 2 de la figure 3a.

La partie A de la figure 3b représente, comme la partie A de la figure 2b déjà décrite, un exemple de signal de contrôle Scr.

La partie B de la figure 3b représente, comme la partie B de la figure 2b déjà décrite, un exemple de signal de contrôle Scv.

La partie C de la figure 3b représente :
- en traits discontinus, un exemple de signal Sd,
- en traits pleins, le signal obtenu en sortie de l'échantillonneur-bloqueur 212a commandé par les moyens de contrôle 221.

En dehors des intervalles de prévention Ip, le signal obtenu en sortie de l'échantillonneur-bloqueur 212a en mode échantillonneur correspond, à l'échantillonnage près, au signal Sd.

Au cours des intervalles de prévention Ip, l'échantillonneur-bloqueur 212a en mode bloqueur forme le signal de remplacement Sr qui est de valeur sensiblement constante égale à la valeur bloquée.

Comme dans la figure 2b, le retard T1 a une durée sensiblement nulle. Le retard T2 a une durée sensiblement inférieure au cas représenté sur la figure 2b, car le temps d'établissement du signal Sd est plus court que celui du signal Sf de la figure 2b, en raison d'une bande fréquentielle du signal Sd qui est plus large que celle du signal Sf de la figure 2b, du fait que ledit signal Sd n'a pas encore été filtré par les moyens de filtrage passe-bas 210.

La partie D de la figure 3b représente le signal corrigé Sc obtenu en corrigeant un signal Sf, obtenu par filtrage du signal en sortie de l'échantillonneur-bloqueur 212a, par le signal de biais Sb.

Le temps d'établissement du signal corrigé Sc dépend notamment de la constante de temps des moyens de filtrage passe-bas 210, et d'une valeur de départ et d'une valeur d'arrivée en entrée desdits moyens de filtrage passe-bas. Dans cette variante de réalisation :
- la valeur de départ correspond à la valeur bloquée, c'est-à-dire la valeur du signal Sd à la fin d'une période de détection Pd,
- la valeur d'arrivée correspond à la valeur du signal Sd à la fin du retard T2, voisine de la valeur dudit signal Sd à la fin de la période de détection Pd suivante.

Dans le cas où la température Ta varie peu d'une période de détection Pd à l'autre, les valeurs de départ et d'arrivée sont proches. On comprend qu'un retard T1 de durée nulle est avantageux dans ce cas afin d'avoir pour valeur bloquée la valeur du signal Sd à la fin de la période de détection Pd précédente.

En considérant sensiblement les mêmes moyens de filtrage passe-bas que dans le cas de la figure 2a, c'est-à-dire avec sensiblement la même constante de temps, le temps d'établissement du signal corrigé Sc est réduit par rapport au cas de la figure 2b, du fait que dans le cas de la figure 2b, la valeur de départ est sensiblement nulle alors que dans le cas de la figure 3b la valeur de départ correspond à la valeur du signal Sd à la fin d'une période de détection Pd précédente. Ceci est avantageux car on dispose de plus de temps par période de détection Pd pour mesurer la température Ta.

En considérant des moyens de filtrage passe-bas 210 de constante de temps supérieure à la constante de temps des moyens de filtrage passe-bas de la figure 2a, le temps d'établissement du signal corrigé Sc pourra être sensiblement le même que dans le cas de la figure 2b, mais le rapport signal sur bruit sera amélioré du fait que la bande fréquentielle des moyens de filtrage passe-bas 210 est alors moins large que dans le cas de la figure 2a.

Cette variante de réalisation, dans laquelle l'échantillonneur-bloqueur 212a se trouve avant les moyens de filtrage passe-bas 210, est donc particulièrement avantageuse du fait que les caractéristiques desdits moyens de filtrage peuvent être choisies, selon les besoins, pour augmenter le temps disponible par période de détection Pd pour mesurer la température Ta ou pour améliorer le rapport signal sur bruit en sortie du radiomètre 2. Toutefois, la bande fréquentielle jusqu'aux moyens de filtrage passe-bas 210 est supérieure au cas de la figure 2a, ce qui implique une électronique plus exigeante.

Dans un second temps, on considère le cas où les moyens de formation 212 forment un signal de remplacement Sr se substituant au signal de biais Sb, au cours des intervalles de prévention Ip.

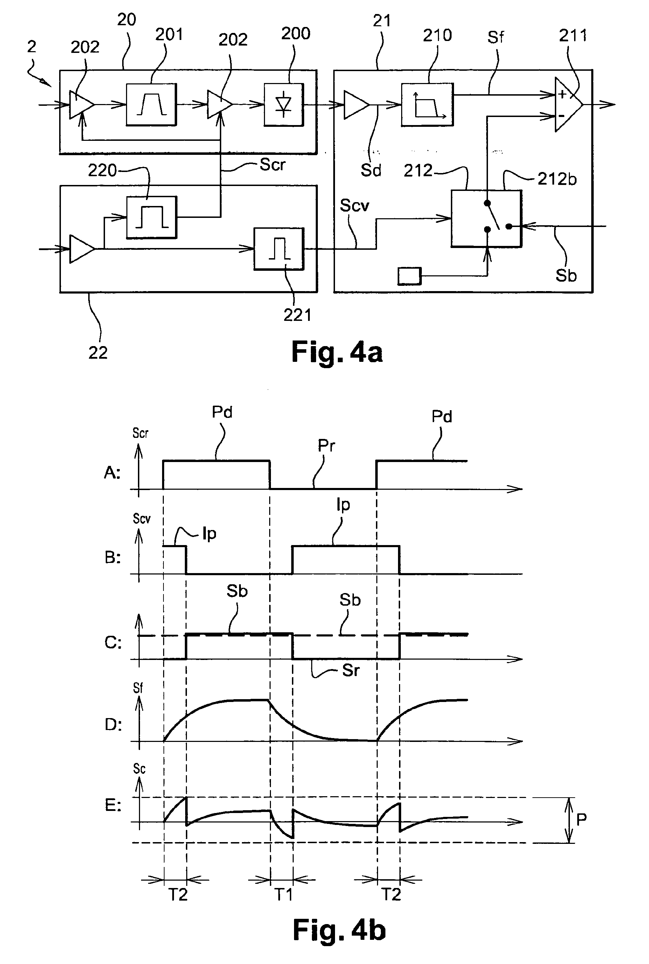

Dans un mode préféré de réalisation du radiomètre 2 selon l'invention, représenté sur la figure 4a, les moyens de formation 212 comportent des moyens de commutation, tel qu'un circuit commutateur 212b qui remplace le signal de biais Sb par un signal de remplacement Sr de valeur sensiblement nulle, par exemple obtenu par un raccordement à la masse.

La figure 4b représente un diagramme temporel de différents signaux qui illustrent le fonctionnement du radiomètre 2 de la figure 4a.

La partie A de la figure 4b représente, comme la partie A des figures 2b et 3b déjà décrites, un exemple de signal de contrôle Scr.

La partie B de la figure 4b représente, comme la partie B des figures 2b et 3b déjà décrites, un exemple de signal de contrôle Scv.

La partie C de la figure 4b représente un signal obtenu en sortie du circuit commutateur 212b, correspondant :
- au signal de biais Sb en dehors des intervalles de prévention Ip,
- à un signal de remplacement Sr de valeur sensiblement nulle pendant les intervalles de prévention Ip.

La partie D de la figure 4b représente un exemple de signal Sf.

La partie E de la figure 4b représente le signal corrigé Sc, obtenu par soustraction du signal en sortie du circuit commutateur 212b au signal Sf.

Dans l'exemple représenté sur la figure 4b, le retard T1 a une durée non nulle, du fait qu'une commutation du signal de biais Sb au début d'une période de repos Pr est susceptible d'entraîner une sortie de la plage P.

De manière plus générale, le radiomètre 2 selon l'invention ne se limite pas aux modes décrits et s'étend aux modifications à la portée de l'homme de l'art. En particulier, il est possible combiner des modes conduisant à former à la fois 1) un premier signal de remplacement, remplaçant le signal Sd ou le signal Sf, et 2) un second signal de remplacement, remplaçant le signal de biais Sb.

De manière plus générale, on note également que le signal de remplacement Sr n'est pas, suivant d'autres exemples, de valeur sensiblement constante. Dans une variante de réalisation du mode décrit en référence à la figure 4a, le signal de remplacement Sr, utilisé pour remplacer le signal de biais Sb, est par exemple le signal Sf. Le signal corrigé Sc, obtenu par soustraction du signal en sortie du circuit commutateur 212b au signal Sf, est au cours des intervalles de prévention Ip sensiblement nul, car le signal de remplacement Sr et le signal Sf sont sensiblement les mêmes. Le signal corrigé Sc est de valeur instantanée comprise dans la plage P, avec un signal de remplacement Sr dont la valeur n'est pas constante (on voit sur la partie D de la figure 4b que le signal Sf n'est pas constant au cours des intervalles de prévention Ip).

L'invention concerne également un procédé de mesure de température d'une scène radiométrique, par exemple mis en oeuvre par le radiomètre 2 selon l'invention, comportant les étapes suivantes :
a) détection du signal Sd représentatif de la température système Tsys incorporant la température Ta de scène radiométrique et la température Tb de bruit propre du radiomètre,
b) filtrage passe-bas du signal Sd, produisant le signal Sf,
c) détermination du signal de biais Sb,
d) correction du signal Sf par le signal de biais Sb.

Le procédé selon l'invention comporte également une étape e), préalable à l'étape d).

Au cours de l'étape e), on remplace pendant les intervalles de prévention Ip l'un des signaux Sd ou Sf ou Sb par un signal de remplacement Sr, de préférence de valeur sensiblement constante.

Dans un mode préféré de mise en oeuvre, le signal Sd est remplacé par un signal de remplacement Sr de valeur sensiblement constante égale à la valeur dudit signal Sd sensiblement au moment du début de l'intervalle de prévention Ip, par exemple en bloquant la valeur du signal Sd.

Dans une variante du mode de mise en oeuvre précédent, le signal Sf est remplacé par un signal de remplacement Sr de valeur sensiblement constante égale à la valeur dudit signal Sf sensiblement au moment du début de l'intervalle de prévention Ip, par exemple en bloquant la valeur du signal Sf.

Dans un autre mode préféré de mise en oeuvre, pouvant être combiné avec l'un des modes précédents, le signal de biais Sb est remplacé par un signal de remplacement Sr de valeur sensiblement nulle.

De préférence, la durée du retard T1 d'une part, la durée du retard T2 d'autre, sont les mêmes pour chaque intervalle de prévention Ip.

Le radiomètre et le procédé de mesure selon l'invention permettent d'éviter des saturations qui seraient pénalisantes pour les mesures de températures. Dans certains cas, il est possible d'augmenter le temps disponible par période de détection Pd pour mesurer la température de scène radiométrique, et/ou d'augmenter la constante de temps des moyens de filtrage passe-bas, permettant d'améliorer la sensibilité du radiomètre.

## Revendications

1. Radiomètre (2) de mesure de température de scène radiométrique, adapté à mesurer une température de scène radiométrique au cours de périodes récurrentes, dites périodes de détection (Pd), séparées par des périodes, dites périodes de repos (Pr), ledit radiomètre comportant au moins :
- des moyens de détection (200) d'un signal Sd représentatif en période de détection (Pd) d'une température système, ladite température système incorporant la température de scène radiométrique et une température de bruit propre du radiomètre (2),
- des moyens de filtrage passe-bas (210) du signal Sd produisant un signal Sf,
- des moyens d'obtention d'un signal de biais Sb représentatif de la température de bruit propre du radiomètre (2),
- des moyens de correction (211) du signal Sf par le signal de biais Sb,
**caractérisé en ce que** ledit radiomètre comporte :
- des moyens de formation (212) d'un signal, dit signal de remplacement Sr, utilisé pour remplacer l'un des signaux Sd ou Sf ou Sb,
- des moyens de contrôle (221) des moyens de formation (212), qui sont adapté à commander la formation du signal de remplacement Sr au cours d'intervalles de prévention (Ip) récurrents, un intervalle de prévention (Ip) débutant par rapport à une fin d'une période de détection (Pd) avec un retard T1 de durée positive ou nulle, inférieure à la durée d'une période de repos (Pr), et terminant par rapport à un début de la période de détection (Pd) suivante avec un retard T2 de durée positive et inférieure à la durée de ladite période de détection.

2. Radiomètre (2) selon la revendication 1, dans lequel le signal de remplacement Sr est de valeur sensiblement constante au cours d'un intervalle de prévention (Ip).

3. Radiomètre (2) selon la revendication 2, dans lequel les moyens de formation (212) remplacent le signal Sd par un signal de remplacement Sr de valeur sensiblement constante égale à la valeur dudit signal Sd sensiblement au moment du début de l'intervalle de prévention (Ip).

4. Radiomètre (2) selon la revendication 2, dans lequel les moyens de formation (212) remplacent le signal Sf par un signal de remplacement Sr de valeur sensiblement constante égale à la valeur dudit signal Sf sensiblement au moment du début de l'intervalle de prévention (Ip).

5. Radiomètre (2) selon l'une des revendications 3 ou 4, dans lequel les moyens de formation (212) comportent un échantillonneur-bloqueur (212a).

6. Radiomètre (2) selon la revendication 1 ou 2, dans lequel les moyens de formation (212) comportent un circuit commutateur (212b) qui remplace le signal Sb par un signal de remplacement Sr, de préférence de valeur sensiblement nulle.

7. Radiomètre (2) selon l'une des revendications précédentes, dans lequel la durée du retard T1 est la même pour chaque intervalle de prévention (Ip).

8. Radiomètre (2) selon l'une des revendications précédentes, dans lequel la durée du retard T2 est la même pour chaque intervalle de prévention (Ip).

9. Procédé de mesure de température de scène radiométrique au moyen d'un radiomètre (2), dans lequel une température de scène radiométrique est mesurée au cours de périodes récurrentes, dites périodes de détection (Pd), séparées par des périodes, dites périodes de repos (Pr), ledit procédé comportant au cours des périodes de détection les étapes de :
a) détection d'un signal représentatif d'une température système, ladite température système incorporant la température de scène radiométrique et une température de bruit propre du radiomètre,
b) filtrage passe-bas du signal résultant de l'étape a),
c) détermination d'un signal de biais représentatif de la température de bruit propre du radiomètre (2),
d) correction du signal résultant de l'étape b) par le signal de biais, **caractérisé en ce que** ledit procédé comporte également une étape, préalable à l'étape d), de :
e) remplacement pendant des intervalles de prévention (Ip) récurrents d'un signal résultant de l'une des étapes a) ou b) ou c) par un signal, dit signal de remplacement, un intervalle de prévention (Ip) débutant par rapport à une fin d'une période de détection avec un retard T1 de durée positive ou nulle, inférieure à la durée d'une période de repos (Pr), et terminant par rapport à un début de la période de détection (Pd) suivante avec un retard T2 de durée positive et inférieure à la durée de ladite période de détection.

10. Procédé selon la revendication 9, dans lequel le signal de remplacement est un signal de valeur sensiblement constante au cours d'un intervalle de prévention (Ip).

11. Procédé selon la revendication 10, dans lequel dans l'étape e) le signal résultant de l'étape a) est remplacé par un signal de remplacement de valeur sensiblement constante égale à la valeur dudit signal résultant de l'étape a) sensiblement au moment du début de l'intervalle de prévention (Ip).

12. Procédé selon la revendication 10, dans lequel dans l'étape e) le signal résultant de l'étape b) est remplacé par un signal de remplacement de valeur sensiblement constante égale à la valeur dudit signal résultant de l'étape b) sensiblement au moment du début de l'intervalle de prévention (Ip).

13. Procédé selon la revendication 10, dans lequel dans l'étape e) le signal de biais résultant de l'étape c) est remplacé par un signal de remplacement de valeur sensiblement nulle.

14. Procédé selon l'une des revendications 9 à 13, dans lequel la durée du retard T1 est la même pour chaque intervalle de prévention (Ip).

15. Procédé selon l'une des revendications 9 à 14, dans lequel la durée du retard T2 est la même pour chaque intervalle de prévention (Ip).

## Claims

1. A radiometer (2) for measuring radiometric field temperature, adapted to measure a radiometric field temperature during recurrent periods, referred to as detection periods (Pd), separated by periods, referred to as rest periods (Pr), said radiometer comprising at least:
- detection means (200) for detecting a signal Sd representative, during a detection period (Pd), of a system temperature, said system temperature incorporating the radiometric field temperature and a noise temperature specific to the radiometer (2),
- low pass filtering means (210) for filtering the signal Sd to produce a signal Sf,
- means for obtaining a bias signal Sb representative of the noise temperature specific to the radiometer (2),
- correction means (211) for correcting the signal Sf with the bias signal Sb,
**characterised in that** said radiometer comprises:
- formation means (212) for forming a signal, referred to as a replacement signal Sr, used to replace one of the signals Sd, Sf or Sb,
- control means (221) for controlling the formation means (212), adapted to control the formation of the replacement signal Sr during recurrent prevention intervals (Ip), a prevention interval (Ip) beginning, with respect to the end of a detection period (Pd), with a delay T1 the duration of which is either zero or positive and inferior to the duration of a rest period (Pr), and ending, with respect to the beginning of the next detection period (Pd), with a delay T2 the duration of which is positive and inferior to the duration of said detection period.

2. A radiometer (2) according to claim 1, wherein the replacement signal Sr has a substantially constant value during a prevention interval (Ip).

3. A radiometer (2) according to claim 2, wherein the formation means (212) replace the signal Sd with a replacement signal Sr, the value of which is substantially constant and equal to the value of said signal Sd at substantially the beginning of the prevention interval (Ip).

4. A radiometer (2) according to claim 2, wherein the formation means (212) replace the signal Sf with a replacement signal Sr, the value of which is substantially constant and equal to the value of said signal Sf at substantially the beginning of the prevention interval (Ip).

5. A radiometer (2) according to one of claims 3 or 4, wherein the formation means (212) comprise a sample-and-hold device (212a).

6. A radiometer (2) according to claim 1 or 2, wherein the formation means (212) comprise a switch circuit (212b), which replaces the signal Sb with a replacement signal Sr, preferably of substantially zero value.

7. A radiometer (2) according to one of the previous claims, wherein the duration of the delay T1 is the same for each prevention interval (Ip).

8. A radiometer (2) according to one of the previous claims, wherein the duration of the delay T2 is the same for each prevention interval (Ip).

9. A method for measuring radiometric field temperature by means of a radiometer (2), wherein a radiometric field temperature is measured during recurrent periods, referred to as detection periods (Pd), separated by periods, referred to as rest periods (Pr), said method comprising during the detection periods the steps of:
a) detecting a signal representative of a system temperature, said system temperature incorporating the radiometric field temperature and a noise temperature specific to the radiometer,
b) low pass filtering of the signal produced in step a),
c) determining a bias signal representative of the noise temperature specific to the radiometer (2),
d) correcting the signal produced in step b) with the bias signal, **characterised in that** said method also comprises a step, prior to step d), of:
e) replacing, during the recurrent prevention intervals (Ip), a signal produced in one of steps a), b) or c) with a signal, referred to as a replacement signal, a prevention interval (Ip) beginning, with respect to the end of a detection period, with a delay T1 the duration of which is either zero or positive and inferior to the duration of a rest period (Pr), and ending, with respect to the beginning of the next detection period (Pd), with a delay T2 the duration of which is positive and inferior to the duration of said detection period.

10. A method according to claim 9, wherein the replacement signal has a substantially constant value during a prevention interval (Ip).

11. A method according to claim 10, wherein in step e), the signal produced in step a) is replaced with a replacement signal, the value of which is substantially constant and equal to the value of said signal produced in step a) at substantially the beginning of the prevention interval (Ip).

12. A method according to claim 10, wherein in step e), the signal produced in step b) is replaced with a replacement signal, the value of which is substantially constant and equal to the value of said signal produced in step b) at substantially the beginning of the prevention interval (Ip).

13. A method according to claim 10, wherein in step e), the bias signal produced in step c) is replaced with a replacement signal, of substantially zero value.

14. A method according to one of claims 9 to 13, wherein the duration of the delay T1 is the same for each prevention interval (Ip).

15. A method according to one of claims 9 to 14, wherein the duration of the delay T2 is the same for each prevention interval (Ip).

## Patentansprüche

1. Radiometer (2) zum Messen der Temperatur einer radiometrischen Szene, das angepasst ist, um eine Temperatur einer radiometrischen Szene im Laufe von immer wiederkehrenden Perioden zu messen, die Erfassungsperioden (Pd) genannt werden, die wiederum durch Perioden getrennt werden, die Ruheperioden (Pr) genannt werden, wobei das besagte Radiometer zumindest folgendes umfasst:
- Vorrichtungen zum Erfassen (200) eines repräsentativen Signals Sd einer Systemtemperatur in der Erfassungsperiode (Pd), wobei die besagte Systemtemperatur die Temperatur einer radiometrischen Szene und eine Temperatur des Eigengeräusches des Radiometers (2) umfasst,
- Vorrichtungen zur Niederpassfilterung (210) des Signals Sd zur Erstellung eines Signals Sf,
- Vorrichtungen zum Erhalt eines repräsentativen Verzerrungssignals Sb der Temperatur des Eigengeräusches des Radiometers (2),
- Vorrichtungen zur Korrektur (211) des Signals Sf durch das Verzerrungssignal Sb,
**dadurch gekennzeichnet, dass** das besagte Radiometer folgendes umfasst:
- Vorrichtungen zur Bildung (212) eines Signals, das Ersatzsignal Sr genannt, und als Ersatzsignal eines der Signale Sd oder Sf oder Sb verwendet wird,
- Vorrichtungen zur Kontrolle (221) der Bildungsvorrichtungen, die angepasst sind, um im Laufe von immer wiederkehrenden Vorbeugungsintervallen (Ip) die Bildung des Ersatzsignals Sr anzusteuern, wobei ein Vorbeugungsintervall (Ip) mit einer Verzögerung T1 mit positiver oder Null-Dauer in Bezug auf ein Ende einer Erfassungsperiode (Pd) beginnt, die geringer ist, als die Dauer einer Ruheperiode (Pr), und in Bezug auf einen Beginn der folgenden Erfassungsperiode (Pd) mit einer Verzögerung T2 endet, deren Dauer positiv oder kleiner ist, als die besagte Erfassungsperiode.

2. Radiometer (2) nach Anspruch 1, bei dem das Ersatzsignal Sr im Laufe eines Vorbeugungsintervalls (Ip) einen in etwa konstanten Wert aufweist.

3. Radiometer (2) nach Anspruch 2, bei dem die Bildungsvorrichtungen (212) das Signal Sd durch ein Ersatzsignal Sr ersetzen, dessen Wert etwa zum Zeitpunkt des Beginns des Vorbeugungsintervalls (Ip) in etwa konstant und gleich dem Wert des besagten Signals Sd ist.

4. Radiometer (2) nach Anspruch 2, bei dem die Bildungsvorrichtungen (212) das Signal Sf durch ein Ersatzsignal Sr ersetzen, dessen Wert etwa zum Zeitpunkt des Beginns des Vorbeugungsintervalls (Ip) in etwa konstant und gleich dem Wert des besagten Signals Sf ist.

5. Radiometer (2) nach einem der Ansprüche 3 oder 4, bei dem die Bildungsvorrichtungen (212) einen Abtaster-Blockierer (212a) umfassen.

6. Radiometer (2) nach Anspruch 1 oder 2, bei dem die Bildungsvorrichtungen (212) einen Umschalterkreis (212b) umfassen, der das Signal Sb durch ein Ersatzsignal Sr ersetzt, das vorteilshalber den Wert von etwa Null aufweist.

7. Radiometer (2) nach einem der vorherigen Ansprüche, bei dem die Dauer der Verzögerung T1 für jedes Vorbeugungsintervall (Ip) dieselbe ist.

8. Radiometer (2) nach einem der vorherigen Ansprüche, bei dem die Dauer der Verzögerung T2 für jedes Vorbeugungsintervall (Ip) dieselbe ist.

9. Verfahren zum Messen der Temperatur einer radiometrischen Szene anhand eines Radiometers (2), bei dem eine Temperatur einer radiometrischen Szene im Laufe von immer wiederkehrenden Perioden gemessen wird, die Erfassungsperioden (Pd) genannt werden, die durch Perioden getrennt werden, die Ruheperioden (Pr) genannt werden, wobei das besagte Verfahren im Laufe der Erfassungsperioden die folgenden Schritte umfasst:
a) Erfassen eines repräsentativen Signals einer Systemtemperatur, wobei die besagte Systemtemperatur die Temperatur einer radiometrischen Szene und eine Temperatur des Eigengeräusches des Radiometers umfasst,
b) Niederpassfilterung des Signals aus dem Schritt a),
c) Bestimmung eines repräsentativen Verzerrungssignals der Temperatur des Eigengeräusches des Radiometers (2),
d) Korrektur des Signals aus dem Schritt b) durch das Verzerrungssignal, **dadurch gekennzeichnet, dass** das besagte Verfahren auch einen Schritt vor dem Schritt d) umfasst, nämlich:
e) den Ersatz eines Signals aus einem der Schritte a) oder b) oder c) innerhalb der immer wiederkehrenden Vorbeugungsintervalle (Ip) durch ein Signal, das Ersatzsignal genannt wird, wobei ein Vorbeugungsintervall (Ip) mit einer Verzögerung T1 mit positiver oder Null-Dauer in Bezug auf ein Ende einer Erfassungsperiode (Pd) beginnt, die geringer ist, als die Dauer einer Ruheperiode (Pr), und in Bezug auf einen Beginn der folgenden Erfassungsperiode (Pd) mit einer Verzögerung T2 endet, deren Dauer positiv oder kleiner ist, als die besagte Erfassungsperiode.

10. Verfahren nach Anspruch 9, bei dem das Ersatzsignal ein Signal ist, dessen Wert im Laufe eines Vorbeugungsintervalls (Ip) in etwa konstant ist.

11. Verfahren nach Anspruch 10, bei dem im Schritt e) das resultierende Signal aus dem Schritt a) durch ein Ersatzsignal ersetzt wird, dessen in etwa konstanter Wert gleich dem Wert des besagten Signals ist, das sich aus dem Schritt a) in etwa zum Zeitpunkt des Beginns des Vorbeugungsintervalls (Ip) ergibt.

12. Verfahren nach Anspruch 10, bei dem im Schritt e) das resultierende Signal aus dem Schritt b) durch ein Ersatzsignal ersetzt wird, dessen in etwa konstanter Wert gleich dem Wert des besagten Signals ist, das sich aus dem Schritt b) in etwa zum Zeitpunkt des Beginns des Vorbeugungsintervalls (Ip) ergibt.

13. Verfahren nach Anspruch 10, bei dem im Schritt e) das Verzerrungssignal, das aus dem Schritt c) resultiert, durch ein Ersatzsignal mit einem Wert von etwa Null ersetzt wird.

14. Verfahren nach einem der Ansprüche 9 bis 13, bei dem die Verzögerungsdauer T1 für jedes Vorbeugungsintervall (Ip) dieselbe ist.

15. Verfahren nach einem der Ansprüche 9 bis 14, bei dem die Verzögerungsdauer T2 für jedes Vorbeugungsintervall (Ip) dieselbe ist.
